# EUROPÄISCHE PATENTANMELDUNG

(11) **EP 2 980 541 A1**
(43) Veröffentlichungstag der Anmeldung: **03.02.2016**
(21) Anmeldenummer: 15178421.2
(22) Anmeldetag: 27.07.2015
(51) Int. Cl.: G01G 19/56

(54) **VERFAHREN ZUM BEDIENEN EINES DATENVERARBEITUNGSGERÄTES, WAAGE UND KOMBINATION AUS WAAGE UND DATENVERARBEITUNGSGERÄT**

(30) Priorität: 31.07.2014 DE 102014110893
(71) Anmelder: Leifheit AG, 56377 Nassau (DE)
(72) Erfinder: Stange, Pedro, 65582 Diez (DE); Maaß, Karsten, 65510 Hünstetten (DE)
(74) Vertreter: Bungartz Christophersen Partnerschaft mbB Patentanwälte

(57) **Zusammenfassung**

Die Erfindung betrifft ein Verfahren zum Bedienen eines Datenverarbeitungsgerätes (1) über ein Anwenderprogramm bei dem eine Datenverbindung (3) zwischen dem Datenverarbeitungsgerät (1) und einem, über eine Gerätesteuerung bedienbaren und eine Schnittstelle zur Kopplung mit dem Datenverarbeitungsgerät (1) aufweisenden, als Waage ausgebildeten Haushaltsgerät (2) hergestellt wird, so dass Daten zwischen Haushaltsgerät (2) und Datenverarbeitungsgerät (1) zumindest unidirektional in Richtung des Datenverarbeitungsgerätes (1) übertragbar sind.

Bekannt ist, Daten vom Datenverarbeitungsgerät (1) auf das Haushaltsgerät (2) zu übertragen. Auch die umgekehrte Datenübertragung ist als Zustandsmeldung bekannt, die dann von einem Anwenderprogramm übernommen und verarbeitet wird. Durch die Erfindung wird zusätzlich möglich, dass das Datenverarbeitungsgerät (1) mittels des Haushaltsgerätes (2) bedient wird.

## Beschreibung

Die Erfindung betrifft ein Verfahren zum Bedienen eines Datenverarbeitungsgerätes bei dem auf dem Datenverarbeitungsgerät ein Anwenderprogramm aufrufbar ist und anschließend abläuft. Dabei wird eine Datenverbindung zwischen dem Datenverarbeitungsgerät und einem, über eine Gerätesteuerung bedienbaren und eine Schnittstelle zur Kopplung mit dem Datenverarbeitungsgerät aufweisenden Haushaltsgerät hergestellt, so dass Daten zwischen Haushaltsgerät und Datenverarbeitungsgerät zumindest unidirektional in Richtung des Datenverarbeitungsgerätes übertragbar sind. Dabei wird als Haushaltsgerät eine Waage verwendet. Ferner betrifft die Erfindung eine Waage zur Durchführung des Verfahrens sowie ein System, das von einer Waage und einem Datenverarbeitungsgerät zur Durchführung des Verfahrens besteht.

Aus der DE 10 2009 020 471 A1 ist ein Haushaltsgerät in Form einer Waage bekannt, dass ein berührungsempfindliches Display in Form eines Touch-Screen als Tragplatte aufweist, über den ein Rezept unter der Tragplatte dargestellt werden kann, so dass dem Benutzer während des kumulativen Zusammenführens der einzelnen Bestandteile das Rezept angezeigt werden kann. Gleichzeitig kann ihm die Menge der noch fehlenden Zutat angezeigt werden.

Diese Waage hat aber den Nachteil, dass die Verwendung des Touch-Screens als Tragplatte aufwändig ist und eine aufwändigere Eigenlogik der Waage erfordert, so dass die Herstellungskosten der Waage sehr hoch sind. Ein weiterer Nachteil besteht darin, dass die so aufgebaute Tragplatte temperatur- und feuchtigkeitsempfindlich ist.

Aus der DE10 2012 219 786 A1 ist eine Waage bekannt, bei der externe Daten über die Anzeigevorrichtung eines Smartphones auf die Waage dadurch übertragen werden können, dass das Smartphone einen QR- oder Balkencode anzeigt, der wiederum von der Waage eingelesen werden kann. Hier findet eine Kommunikation zwischen dem Smartphone und der Waage statt, allerdings kann diese Waage nur Daten lesen, nicht jedoch interaktiv mit dem Smartphone kommunizieren.

Aus der DE10 2005 031 269 B3 ist eine Waage bekannt, bei der über einen Transponder Rezepte von einem, auf einem Rechner abgelegten Rezeptspeicher auf eine Waage übertragen werden und schrittweise dem Benutzer angezeigt werden. Dies hat aber auch den Nachteil, dass die Waage das Rezept anzeigen muss bzw. über eine Elektronik verfügen muss, die die einzelnen Schritte visuell sichtbar macht.

Aus der DE10 2008 008 712 A1 ist ebenfalls eine so genannte Rezeptwaage bekannt, bei der eine interaktive Kommunikation zwischen dem Rezeptspeicher und der Waage stattfindet. Hier werden nacheinander die einzelnen Schritte abgearbeitet, so dass sich der Benutzer durch das Rezept hindurch arbeiten kann, indem er nacheinander die Waage genutzt, um die benötigten Zutaten abzuwiegen.

Auch hier muss die Waage in der Lage sein, die jeweiligen Schritte anzuzeigen, was zu einem erhöhten Herstellaufwand führt.

Darüber hinaus ist allgemein bekannt, die Rezepte auf einem üblichen Smartphone oder einem Tablet-PC anzeigen zu lassen. Der Benutzer kann dann das Rezept nachkochen, was den Vorteil hat, dass er nicht nur Gewichtsinformationen und Informationen über die Zutaten erhält, sondern auch dass die übrigen Angaben im Rezept, zum Beispiel wie er mit den Zutaten verfahren soll oder beispielhafte Abbildungen über die Zubereitung, zur Verfügung stehen.

Der Nachteil dieses Verfahrens zum Nachkochen des Rezepts besteht aber darin, dass der Benutzer während des Kochens das Datenverarbeitungsgerät bedienen muss. Da der Koch oder die Köchin häufig schmutzige Finger haben, besteht somit die Gefahr, dass das Datenverarbeitungsgerät verunreinigt wird. Darüber hinaus sind solche Geräte üblicherweise nicht feuchtigkeitsdicht, im Gegenteil, viele Smartphones sind extrem empfindlich in Bezug auf eindringendes Wasser.

Die DE 100 53 209 beschreibt die Verwendung einer standardisieren Fernbedienung für unterschiedlichste Geräte. Zwar ließe sich über eine solche Fernbedienung auch ein Tablet-Computer in einer Küchenumgebung bedienen, letztlich erfordert dies aber ein weiteres Bauteil und bewahrt dieses nicht dafür, in der nicht immer trockenen und sauberen Küchenumgebung beschädigt zu werden.

Aufgabe der Erfindung ist es daher, ein Verfahren zum Abarbeiten von haushaltsnahen, rechnergestützten Arbeitsanweisungen mit möglichst geringem Aufwand auf Seiten des Haushaltsgerätes zu schaffen, bei dem der Benutzer die Anweisung des Datenverarbeitungsgerätes materialschonend und einfach erkennbar mitgeteilt bekommen kann. Eine weitere Aufgabe der Erfindung ist es, die zur Durchführung des Verfahrens notwendige Hardware zu schaffen.

Diese Aufgabe wird nach der Erfindung hinsichtlich des Verfahrens durch ein Verfahren nach Anspruch 1 gelöst. Hinsichtlich der Waage bzw. der Kombination einer Waage mit einem Datenverarbeitungsgerät wird die Aufgabe durch eine Waage nach Anspruch 11 und eine Kombination nach Anspruch 16 gelöst.

Ein wichtiges Merkmal der vorliegenden Erfindung ist die Tatsache, dass die Waage genutzt wird, um das Datenverarbeitungsgerät zu bedienen. Während die umgekehrte Richtung, dass Daten vom Datenverarbeitungsgerät auf ein Haushaltsgerät übertragen werden, bereits angewendet wird, ist es nun auch möglich, das in der Regel wertvollere Datenverarbeitungsgerät so zu steuern, dass in der Küchenumgebung nicht in Mitleidenschaft gezogen wird. Hierzu wird die bei vielen Verfahren bereits vorhandene Datenverbindung genutzt, um Steuerungsbefehle an das Datenverarbeitungsgerät zusenden. Datenverarbeitungsgeräte können grundsätzlich alle Formen von datenverarbeitenden Vorrichtungen sein, also insbesondere Computer, Terminals, Smartphones oder Tablet-PCs.

Es wird bevorzugt eine vorhandene Sensorik genutzt, um die Benutzerbefehle aufzunehmen und an das Datenverarbeitungsgerät weiterzugeben. Die Datenverbindung erfolgt über übliche Maßnahmen, so kann die Verbindung zwischen den beiden Komponenten Waage einerseits und Datenverarbeitungsgerät andererseits kabelgebunden oder auch kabellos sein.

Als kabellose Verbindung kommen das Einbinden der Geräte in ein Haushaltsnetz im Rahmen eines W-LAN oder auch eine unmittelbare Verbindung der beiden Geräte untereinander über eine Bluetooth®-Verbindung oder eine Infrarot-Verbindung infrage. Sofern die entsprechende Nähe möglich ist, kann auch ein NFC®-Chip in jedem Gerät zur Herstellung einer Nahfeldverbindung Verwendung finden. Letzteres kann zum Beispiel dann Anwendung finden, wenn das Datenverarbeitungsgerät ein Smartphone oder ein Tablet-PC ist und in unmittelbarer Nähe der Waage, beispielsweise in einem Ständer der Waage angeordnet werden kann. Üblicherweise wird aber gerade eine größere Entfernung zwischen dem Datenverarbeitungsgerät und dem Haushaltsgerät erwünscht sein. So kann beispielsweise sogar der Computer im Arbeitszimmer genutzt werden, um von dort Rezepte oder andere Informationen direkt am Haushaltsgeräte nutzbar zu machen.

Im Folgenden wird die Erfindung beispielhaft anhand der Kombination eines Smartphones mit einer Küchenwaage beschrieben.

Das als Waage ausgebildete Haushaltsgerät weist Eingabemöglichkeiten zur Eingabe der Benutzerbefehle auf. Hierzu können ohnehin vorhandene Tasten verwendet werden, die beispielsweise in einen anderen Modus umgeschaltet werden können. Zu diesem Zweck kann, wie oben bereits beschrieben, die Länge des Tastendrucks oder das gemeinsame Drücken mehrerer Tasten oder auch eine explizite Umschalttaste verwendet werden.

Ferner können Tasten vorhanden sein, die nur einmal bedient werden und dann für andere Funktionen zur Verfügung stehen. So kann zum Beispiel die Steuerung der Waage bezüglich der Einschalttaste nach dem Einschalten der Waage einen erneuten Schaltimpuls auf diese Taste als Eingabe eines Bedienbefehls zur Bedienung des Datenverarbeitungsgerätes werten. Möchte der Benutzer das Haushaltsgerät dann endgültig ausschalten, kann er dies über einen langen Tastendruck realisieren.

Natürlich können auch explizite Tasten im Tastenfeld des Haushaltsgerätes vorgesehen sein, die ausschließlich der Bedienung des Datenverarbeitungsgerätes gewidmet sind. Schließlich können bei einer Waage auch die Messwerte der Wägezellen genutzt werden, um Tastenfelder zu simulieren. Es ist bereits bekannt, über den Ort der Belastung im Falle einer punktuellen Belastung eine Funktion der Waage zu bedienen. Hierzu wird über die unterschiedlich starke Belastung der einzelnen Wägezellen der Ort der Krafteinwirkung errechnet. Auf der Tragplatte können dann entsprechende Markierungen vorgesehen sein, so dass der Benutzer weiß, auf welche Stelle er drücken muss, um die gewünschte Funktion auszulösen.

Diese Technik kann genutzt werden, um Tasten für die Eingabe der Bedienbefehle zur Steuerung des Datenverarbeitungsgerätes zu simulieren. Sie kann aber auch als Touchpad genutzt werden, um zum Beispiel einen Mauszeiger zu bewegen. So kann auf dem Datenverarbeitungsgerät ein Anwenderprogramm installiert sein, das eine grafische Benutzeroberfläche aufweist, die über eine Maus bedienbar ist. Hier kann der Benutzer mit seinem Finger über die Tragplatte streichen und so die Maus bewegen. Dies ist insbesondere dann praktisch, wenn der Benutzer die Anzeige des Smartphones bzw. Tablet-PC dabei beobachten kann. Alternativ kann natürlich auch die Waage eine Anzeigevorrichtung aufweisen, die zumindest den aktiven Bereich der Anzeige des Datenverarbeitungsgerätes wiedergibt.

Auf dem Datenverarbeitungsgerät ist bevorzugt das Anwenderprogramm installiert, wobei natürlich dieses Anwenderprogramm auch ein Internet-Browser sein kann, so dass der Benutzer statt des lokal ablaufenden Anwenderprogramms auch Internetseiten aufrufen kann. In beiden Fällen wird er entweder vor dem Beginn seiner Arbeit am Datenverarbeitungsgerät das jeweilige Programm aufrufen bzw. die Internetseite laden oder alternativ vom Haushaltsgerät aus die Funktion wählen, zum Beispiel durch Anwahl seiner Favoriten im Browser. Letztlich ist dies davon abhängig, welche Daten er angezeigt bekommt und in welchem Maße er Benutzerbefehle an das Datenverarbeitungsprogramm senden kann.

Ist zum Beispiel die Tragplatte der Waage so ausgebildet, dass sich hier eine virtuelle Tastatur abbilden kann und gleichzeitig die Anzeige der Waage in der Lage, dem Benutzer die Benutzeroberfläche des Programms oder Browsers darzustellen, kann er auch komplexe Eingaben vornehmen. Insbesondere in Verbindung mit der oben dargestellten Realisierung einer Mausfunktion ist dies möglich.

In einfachen Fällen wird er dagegen lediglich in seinem Smartphone das Rezept aufrufen und dann das Haushaltsgerät zum Beispiel während des Kochens nutzen, um durch das Rezept vor- oder gegebenenfalls zurückzublättern. Dann ist es ausreichend, wenn er lediglich eine Vor- und eine Zurücktaste zur Verfügung hat. Insbesondere dann, wenn die Anzeige des Datenverarbeitungsgerätes für ihn sichtbar ist, kann er so auf besonders einfache Weise durch das Anwenderprogramm, also beispielsweise das Rezept, navigieren, ohne das Datenverarbeitungsgerät berühren zu müssen. Zum Schluss kann er sich dann die Hände waschen und das Datenverarbeitungsgerät ausschalten. Diese einfache Ausgestaltung der Erfindung lässt sich besonders einfach ohne wesentlichen zusätzlichen Hardwareaufwand in bereits bestehende Systeme integrieren.

Nachdem der Benutzer den Impuls zum Auslösen des Benutzerbefehls auf das entsprechende Feld aufgebracht hat, kann die Steuerung des Haushaltsgerätes unmittelbar diesen Impuls über die Datenverbindung an das Datenverarbeitungsgerät weiterleiten.

Eine weitere bevorzugte Ausgestaltung der Erfindung sieht vor, dass die Waage vom Datenverarbeitungsgerät Quittierungssignale empfängt, so dass eine Rückmeldung möglich ist, ob und welche Funktion erfolgreich ausgewählt wurde. Dies ist insbesondere dann sinnvoll, wenn der Benutzer zum Beispiel im Rezept weiterblättern möchte und hierzu eine Taste der Waage betätigt. Wenn er die Anzeige des eingesetzten Smartphones dann nicht im Blick hat, sondern sich umdrehen muss um die nächste Seite zu lesen, ist es sehr praktisch, wenn er schon bei Bedienen der Taste an der Waage Kenntnis darüber erhält, dass das Smartphone ihn verstanden hat und die nächste Seite aufruft. Die Rückmeldung über die erfolgreiche Auswahl der gewünschten Funktion kann optisch oder akustisch erfolgen.

Schließlich kann dann, wenn das Haushaltsgerät, hier also die Waage, eine eigene Anzeige aufweist, auch einen Teil des Anwenderprogramms über die Datenverbindung auf das Haushaltsgerät übertragen werden. Hier kann zum Beispiel ein Abbild der Benutzeroberfläche als so genanntes Front-End des Programms auf das Haushaltsgerät übertragen werden, während die eigentliche Programmabarbeitung mit der Notwendigkeit einer intensiveren Rechenleistung vom Datenverarbeitungsgerät übernommen wird.

Weitere Merkmale und Vorteile der Erfindung ergeben sich der nachfolgenden Beschreibung eines bevorzugten Ausführungsbeispiels anhand der Zeichnungen.

In den Zeichnungen zeigt:
- Figur 1: eine schematische Ansicht einer erfindungsgemäßen Kombination aus Haushaltsgerät und Datenverarbeitungsgerät und
- Figur 2: eine einfache Ausgestaltung eines Anwenderprogramms mit Möglichkeit des Durchblättern.

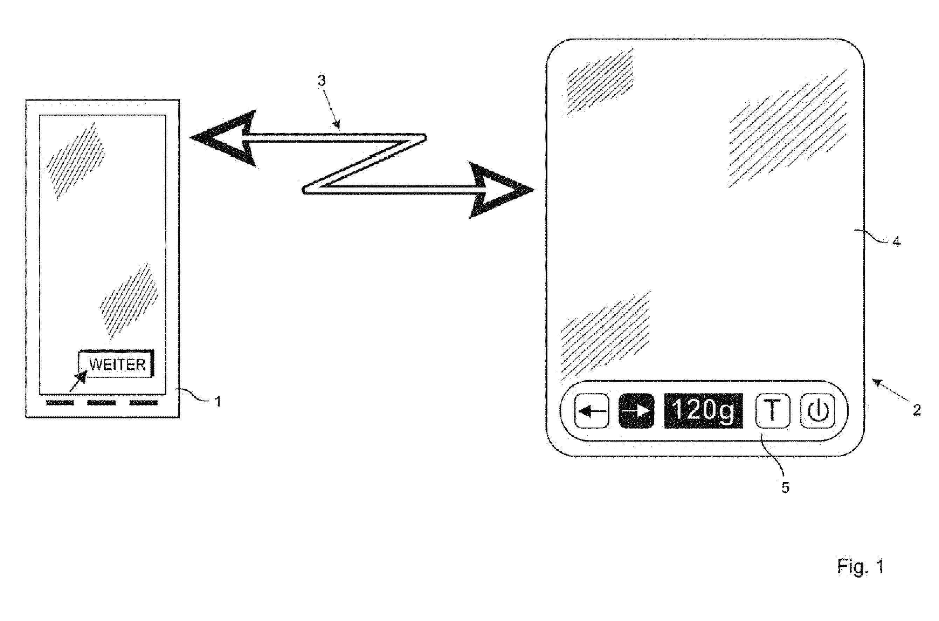

In Figur 1 sind die wesentlichen Grundkomponenten zur Durchführung des erfindungsgemäßen Verfahrens dargestellt. Zum einen ist dies das Datenverarbeitungsgerät 1, das hier von einem Smartphone gebildet ist. Das Datenverarbeitungsgerät 1 steht über eine Datenverbindung 3 in Verbindung mit dem Haushaltsgerät 2. Das Haushaltsgerät 2 ist hier eine Küchenwaage mit einer Tragplatte 4 und einer Eingabemöglichkeit 5 in Form eines Tastenfeldes.

Beispielhaft ist auf der Benutzeroberfläche des Datenverarbeitungsgerätes 1 der Button "WEITER" dargestellt. Der Benutzer könnte nun unmittelbar diese Taste auswählen und drücken, hat jedoch dabei das Risiko, dass das Smartphone verschmutzt oder er muss sich vorher die Hände reinigen und abtrocknen, was wiederum lästig und zeitintensiv ist.

Damit ihm das unmittelbare Bedienen des Smartphones erspart bleibt, kann er nun über die Waage die gewünschten Eingaben vornehmen. Hierzu weist im gezeigten Ausführungsbeispiel das Haushaltsgerät 2 eine Eingabemöglichkeit 5 in Form eines Eingabefeldes auf, dass im rechten Teil eine "Vorwärtsblättern" und eine "Rückwärtsblättern" Taste besitzt. Über diese Tasten kann der Benutzer dann durch das Rezept navigieren.

Da die Waage üblicherweise an die schwierigen Umgebungsbedingungen der Küche angepasst ist, ist hier die Verschmutzung oder drohende Feuchtigkeitseinwirkung kein Problem. Es ist also auch ein Vorteil der Erfindung, dass einfachere, an feuchte Umgebungen ohnehin angepasste Geräte als Fernbedienung eines empfindlichen Datenverarbeitungsgerätes genutzt werden können.

Die Eingabemöglichkeit 5 weist weitere Tastenfelder auf, die hier ausschließlich den Funktionen der Waage vorbehalten sind. Alternativ könnte zum Beispiel der rechts dargestellte Ein-/Ausschalter aber auch zum Ausschalten des Displays des Smartphones genutzt werden, beispielsweise um dessen Batteriekapazität zu schonen. Im gezeigten Beispiel ist ferner im mittleren Bereich ein Display zur Anzeige des Wiegeergebnisses der Waage dargestellt. Auch dieses kann über die Steuerung der Waage und die Datenverbindung 3 mit dem Smartphone interaktiv zusammenarbeiten, so dass bei entsprechend großem Display der Inhalt des Displays des Smartphones auf die Waage gespiegelt werden kann.

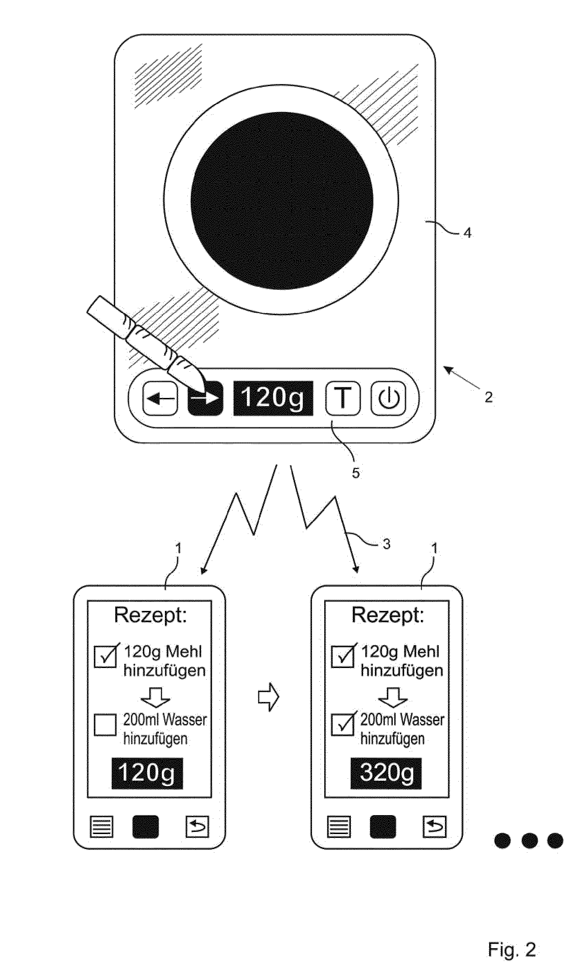

In Figur 2 ist eine klassische Anwendung der Kombination aus Datenverarbeitungsgerät 1 und Haushaltsgerät 2, sowie sie in Figur 1 schematisch dargestellt sind, im Detail nochmals wiedergegeben. Hier ist zur einfachen Darstellung das Smartphone zweimal in einer anderen Verfahrenstiefe des Kochvorgangs dargestellt.

In einem ersten Schritt wird der Benutzer aufgefordert, 120 g Mehl in das auf der Waage stehende Gefäß einzufüllen. Im gezeigten Zustand ist dies bereits erfolgt, die Waage hat bereits dem Datenverarbeitungsgerät 1 zurückgemeldet, dass dieser Rezeptschritt erfolgreich abgearbeitet wurde. Dies ist hier an dem Haken vor dem Kästchen des erforderlichen Schrittes erkennbar.

Nachdem der Benutzer dies quittiert und damit dem Smartphone zu erkennen gibt, dass er nun den nächsten Schritt abarbeiten möchte, wird ihm so lange das vor dem zweiten Schritt stehende Kästchen ohne Haken präsentiert, bis die Waage zurückgemeldet, dass die erforderliche Menge an Wasser in das Gefäß eingefüllt wurde. Die Waage zeigt dabei das Gesamtgewicht an. An dem Haken in den Kästchen vor dem entsprechenden Bearbeitungsschritt erkennt der Benutzer, dass er diese Anforderung erfüllt hat. Nun kann er wiederum mit der Taste "Vorwärtsblättern" den nächsten Schritt des Rezeptes aufrufen. Natürlich erfolgt die Anzeige hier im gleichen Display eines Datenverarbeitungsgerätes 1 hintereinander, die Darstellung zweier Datenverarbeitungsgeräte in Figur 2 ist lediglich der besseren visuellen Darstellung der einzelnen Anzeigen geschuldet.

### Bezugseichenliste:

- 1: Datenverarbeitungsgerät
- 2: Haushaltsgerät
- 3: Datenverbindung
- 4: Tragplatte
- 5: Eingabemöglichkeit

## Patentansprüche

1. Verfahren zum Bedienen eines Datenverarbeitungsgerätes (1), wobei ein Datenverarbeitungsgerät (1) verwendet wird, auf dem ein Anwenderprogramm aufrufbar ist und anschließend abläuft und das über eine Datenverbindung (3) mit einem als Waage ausgebildeten Haushaltsgerät (2) verbunden ist, so dass Daten zwischen Haushaltsgerät (2) und Datenverarbeitungsgerät (1) zumindest unidirektional in Richtung des Datenverarbeitungsgerätes (1) übertragbar sind, **dadurch gekennzeichnet, dass**
zur Bedienung des Datenverarbeitungsgerätes (1) mittels der Waage eine Waage verwendet wird, die über eine Gerätesteuerung bedienbar ist und eine Schnittstelle zur Kopplung mit dem Datenverarbeitungsgerät (1) und wenigstens eine Eingabemöglichkeit (5) zur Eingabe von Benutzerbefehlen aufweist, wobei die Benutzerbefehle über die Datenverbindung (3) zum Datenverarbeitungsgerät (1) übertragen werden und im Datenverarbeitungsgerät (1) dem Anwenderprogramm übergeben werden, wobei das Anwenderprogramm die Benutzerbefehle als Steuerungsbefehle des Anwenderprogramms zu interpretieren vermag.

2. Verfahren zum Bedienen eines Datenverarbeitungsgerätes (1) nach Anspruch 1, **dadurch gekennzeichnet, dass** eine Waage verwendet wird, deren Eingabemöglichkeit (5) zur Eingabe der Benutzerbefehle die Wahl einer räumlichen Position und die Detektion zumindest eines Impulses an der gewählten Position umfasst, wobei der Bediener nach der Wahl der Position den Impuls ausübt, dieser zusammen mit der Position erfasst wird und dem Datenverarbeitungsgerät (1) übermittelt wird und ein Anwenderprogramm verwendet wird, dessen Benutzeroberfläche die Eingabe durch Anwählen wenigstens eines Bereiches der Benutzeroberfläche ermöglicht und das Datenverarbeitungsgerät (1) die übertragene, am Haushaltsgerät gewählte Position und die Zahl der Impulse dem Anwenderprogramm übergibt, so dass die dem entsprechenden Bereich der Benutzeroberfläche zugeordnete Funktion ausgelöst wird.

3. Verfahren zum Bedienen eines Datenverarbeitungsgerätes (1) nach Anspruch 1, **dadurch gekennzeichnet, dass** eine Waage verwendet wird, die Bedienfelder aufweist, denen eine feste Funktion und/oder eine räumliche Lage zugeordnet ist, wobei die Funktion und/oder die Lage dem Datenverarbeitungsgerät (1) über Datenverbindung (3) zur Umsetzung in die Steuerbefehle übermittelt wird.

4. Verfahren zum Bedienen eines Datenverarbeitungsgerätes (1) nach einem der vorhergehenden Ansprüche, **dadurch gekennzeichnet, dass** die Gerätesteuerung der Waage derart ausgebildet ist, dass sie bei Eingabe eines Benutzerbefehls über die Eingabemöglichkeit (5) diesen Benutzerbefehl dem Datenverarbeitungsgerät (1) selbsttätig übermittelt.

5. Verfahren zum Bedienen eines Datenverarbeitungsgerätes (1) nach einem der vorhergehenden Ansprüche, **dadurch gekennzeichnet, dass** eine Waage verwendet wird, deren Eingabemöglichkeit (5) an zumindest einer Position eine Doppelfunktion aufweist, wobei bei erstmaliger Betätigung als Bedieneingabe für eine Funktion der Waage interpretiert und nicht an die Steuerung des Datenverarbeitungsgerätes weitergeleitet wird, während jede weitere Betätigung als Eingabe eines Benutzerbefehls zur Steuerung des Datenverarbeitungsgerätes (1) interpretiert wird, die über die Datenverbindung (3) zur Umsetzung in die entsprechenden Steuerbefehl übermittelt wird.

6. Verfahren zum Bedienen eines Datenverarbeitungsgerätes (1) nach einem der vorhergehenden Ansprüche, **dadurch gekennzeichnet, dass** der Empfang und/oder die Ausführung eines Benutzerbefehls von dem Datenverarbeitungsgerät (1) über die Datenverbindung (3) an die Waage rückübermittelt wird.

7. Verfahren zum Bedienen eines Datenverarbeitungsgerätes (1) nach dem vorhergehenden Anspruch, **dadurch gekennzeichnet, dass** der erfolgreiche Empfang und/oder die Ausführung eines Benutzerbefehls von der Waage akustisch und/oder optisch angezeigt wird.

8. Verfahren zum Bedienen eines Datenverarbeitungsgerätes (1) nach einem der vorhergehenden Ansprüche, **dadurch gekennzeichnet, dass** eine Waage verwendet wird, die eine Anzeigemöglichkeit für die Benutzeroberfläche des Anwenderprogramms aufweist.

9. Verfahren zum Bedienen eines Datenverarbeitungsgerätes (1) nach dem vorhergehenden Anspruch, **dadurch gekennzeichnet, dass** die Anzeigemöglichkeit für die Benutzeroberfläche des Anwenderprogramms ein Bildschirm, insbesondere ein berührungsempfindlicher Bildschirm (Touch-Screen) ist.

10. Verfahren zum Bedienen eines Datenverarbeitungsgerätes (1) nach einem der vorhergehenden Ansprüche, **dadurch gekennzeichnet, dass** eine Teilkomponente des Anwenderprogramms mit der Benutzeroberfläche auf die Waage übertragen wird.

11. Waage zur Durchführung eines Verfahrens zum Bedienen eines Datenverarbeitungsgerätes (1) nach einem der vorhergehenden Ansprüche, wobei die Waage eine Gerätesteuerung, wenigstens eine Eingabemöglichkeit (5) zur Eingabe von durch die Gerätesteuerung abzuarbeitenden Benutzerbefehlen und eine Schnittstelle zur Verbindung mit einem Datenverarbeitungsgerät (1) aufweist, **dadurch gekennzeichnet, dass** die Gerätesteuerung derart ausgebildet ist, dass sie zumindest einen Benutzerbefehl als Benutzerbefehl zur Steuerung eines auf dem Datenverarbeitungsgerät (1) zu startenden oder ablaufenden Anwenderprogramms zu interpretieren vermag und in diesem Fall diesen Befehl direkt oder indirekt zur Übertragung an das Datenverarbeitungsgerät (1) an die Schnittstelle zu übertragen vermag.

12. Waage nach dem vorhergehenden Anspruch zur Durchführung eines Verfahrens zum Bedienen eines Datenverarbeitungsgerätes (1), **dadurch gekennzeichnet, dass** eine Eingabemöglichkeit (5) in Form einer oder mehrerer Tasten vorgesehen ist, über die unterschiedliche Bedienbefehle generierbar sind, die nach ihrer Generierung über die Gerätesteuerung an die Schnittstelle übertragen werden.

13. Waage nach einem der beiden vorhergehenden Ansprüche zur Durchführung eines Verfahrens zum Bedienen eines Datenverarbeitungsgerätes (1), **dadurch gekennzeichnet, dass** zur Steuerung eines Mauszeigers auf dem Datenverarbeitungsgerät eine Vorrichtung zur dynamischen Lokalisation eines kleinflächigen Drucks des Bedieners auf ein Eingabefeld vorgesehen ist, wobei die Bewegungslinie des Druckpunktes von der Gerätesteuerung erfassbar und als dynamischer Verlauf an die Schnittstelle übergebbar ist.

14. Waage nach einem der Ansprüche 12, 13 oder 14 zur Durchführung eines Verfahrens zum Bedienen eines Datenverarbeitungsgerätes (1), **dadurch gekennzeichnet, dass** die Eingabemöglichkeit (5) an einer Tragplatte (4) zur Aufnahme der zu wiegenden Last angeordnet ist oder von dieser gebildet ist.

15. Kombination einer Waage nach einem der Ansprüche 12 bis 15 mit einem Datenverarbeitungsgerät (1) zur Durchführung eines Verfahrens zum Bedienen des Datenverarbeitungsgerätes (1), **dadurch gekennzeichnet, dass** das Haushaltsgerät (2) und das Datenverarbeitungsgerät (1) eine Schnittstelle aufweisen und über eine kabelgebundene oder drahtlose Datenverbindung miteinander verbindbar sind sowie miteinander zu kommunizieren vermögen.

16. Kombination einer Waage mit einem Datenverarbeitungsgerät (1) nach Anspruch 16 zur Durchführung eines Verfahrens zum Bedienen des Datenverarbeitungsgerätes (1), **dadurch gekennzeichnet, dass** das Datenverarbeitungsgerät (1) ein Smartphone oder ein Tablet-PC ist.
